# EUROPÄISCHE PATENTANMELDUNG

(11) **EP 2 224 642 A1**
(43) Veröffentlichungstag der Anmeldung: **01.09.2010**
(21) Anmeldenummer: 09002884.6
(22) Anmeldetag: 27.02.2009
(51) Int. Cl.: H04L 12/40, H04L 12/403

(54) **Kommunikationssystem und Kommunikationsverfahren zur zuverlässigen Kommunikation mit Kommunikationsteilnehmen**

(71) Anmelder: Siemens Aktiengesellschaft, 80333 München (DE)
(72) Erfinder: Barthel, Herbert, 91074 Herzogenaurach (DE); Hammon, Harald, 90471 Nürnberg (DE)

(57) **Zusammenfassung**

Die Erfindung betrifft ein Kommunikationssystem zur zuverlässigen Kommunikation mit Kommunikationsteilnehmern, mit mindestens zwei Feldbus-Mastern zur Steuerung der Kommunikation, mit einer oder mehreren Netzwerk-Komponenten, welche über mindestens eine physikalische Kommunikationsverbindung mit den Feldbus-Mastern verbunden sind, wobei die physikalische Kommunikationsverbindung bei einem Feldbus-Master beginnend die ein oder mehreren Netzwerk-Komponenten in Reihe miteinander verbindet und bei dem zweiten Feldbus-Master endet und mit einem oder mehreren Kommunikationsteilnehmern, welche über je eine logische Kommunikationsverbindung mit je einem der Feldbus-Master verbunden sind.

## Beschreibung

Die Erfindung betrifft ein Kommunikationssystem sowie ein Kommunikationsverfahren zur zuverlässigen Kommunikation mit Kommunikationsteilnehmern.

Bei hochverfügbaren Netzwerken, wie sie in kritischen Automatisierungsanwendungen eingesetzt werden, wird die Verfügbarkeit durch das Einfügen von Redundanz erhöht. Hierbei werden hochverfügbare Steuerungen bzw. redundante Feldbus-Master über eine hochverfügbare Kommunikation mit den Feldgeräten, Aktoren und Sensoren, welche direkte Veränderungen im Prozess verursachen oder Informationen aus dem Prozess bereitstellen verbunden.

Hierbei ist es wichtig, dass jedes Feldgerät, also jeder Aktor und Sensor sowohl bei einer Kommunikationsunterbrechung als auch beim Ausfall einer der redundanten Steuerungen bzw. Feldbus-Master hochverfügbar, d.h., zumindest mit einer Steuerung weiter kommunizieren kann. Eine Kommunikationsunterbrechung kann beispielsweise auftreten, wenn die physikalische Kommunikationsverbindung zwischen den Steuerungen bzw. Feldbus-Mastern und den Feldgeräten unterbrochen wird. Eine Kommunikationsunterbrechung kann auch dann auftreten, wenn beispielsweise ein Feldgerät ausfällt oder ausgetauscht wird. In diesen Fällen muss sichergestellt werden, dass alle, bzw. alle übrigen, in einem hochverfügbaren Netzwerk vorhandenen Feldgeräte mit einem Feldbus-Master bzw. einer Steuerung (SPS) Daten austauschen können. In einem hochverfügbaren Netzwerk für Automatisierungsanwendungen besteht weiterhin die Anforderung, dass eine Kommunikationsunterbrechung wie oben geschildert kürzer als 10 ms sein muss.

Für den Anschluss von Feldgeräten in einem Automatisierungssystem an die redundanten Feldbus-Master sind bisher zwei Netztopologien bekannt:

Bei der Ringtopologie werden sämtliche Feldgeräte oder Switche in einem Ring miteinander verbunden, wobei ein sogenannter Redundanzmanager den Ring schließt. Zur Kommunikation ist hierfür ein sogenanntes **M**edia **R**edundancy **P**rotocol (MRP) notwendig (siehe IEC61158-5-10), welches bei einer Kommunikationsstörung jedoch nur Erholungszeiten zwischen 200 ms und 500 ms garantiert. Auf eine Unterbrechung der Kommunikation kann mit Hilfe des MRP-Protokolls somit nicht hinreichend schnell reagiert werden.

Bei einer Sterntopologie sind mehrere Mehrport-Switche erforderlich, die einen Verfügbarkeitsengpass darstellen können, wenn beispielsweise der Mehrport-Switch ausfällt, fallen auch alle an den Switch angeschlossenen Feldgeräte aus. Damit ist eine Sterntopologie sehr anfällig im Störungsfall.

Die Aufgabe der vorliegenden Erfindung besteht daher darin, ein Kommunikationssystem anzugeben, welches eine schnelle Wiederaufnahme der Kommunikation der Feldgeräte mit den Feldbus-Mastern im Falle einer Kommunikationsunterbrechung ermöglicht.

Die Aufgabe wird gelöst, durch ein Kommunikationssystem zur zuverlässigen Kommunikation mit Kommunikationsteilnehmern, mit mindestens zwei Feldbus-Mastern zur Steuerung der Kommunikation, mit einer oder mehreren Netzwerk-Komponenten, welche über mindestens eine physikalische Kommunikationsverbindung mit den Feldbus-Mastern verbunden sind, wobei die physikalische Kommunikationsverbindung bei einem Feldbus-Master beginnend, die ein oder mehreren Netzwerk-Komponenten in Reihe miteinander verbindet und bei dem zweiten Feldbus-Master endet und mit einem oder mehreren Kommunikationsteilnehmern, welche über je eine logische Kommunikationsverbindung mit je einem der Feldbus-Master verbunden sind.

Weiterhin wird die Erfindung gelöst durch ein Kommunikationsverfahren zur zuverlässigen Kommunikation mit Kommunikationsteilnehmern, bei dem mindestens zwei Feldbus-Master die Kommunikation steuern, bei dem eine oder mehrere Netzwerk-Komponenten über mindestens eine physikalische Kommunikationsverbindung mit den Feldbus-Mastern verbunden sind, wobei die eine oder mehreren Netzwerk-Komponenten bei einem Feldbus-Master beginnend in Reihe über die physikalische Kommunikationsverbindung miteinander verbunden sind und die physikalische Kommunikationsverbindung bei dem zweiten Feldbus-Master endet und bei dem ein oder mehrere Kommunikationsteilnehmer über je eine logische Kommunikationsverbindung mit je einem der Feldbus-Master kommunizieren.

Der Erfindung liegt die Erkenntnis zugrunde, dass ein hochverfügbares Netzwerk ohne Verfügbarkeitsengpass und mit schnellen Erholungszeiten realisiert werden kann, wenn das Netzwerk über eine Linientopologie realisiert wird. Hierbei wird eine Aufbaurichtlinie, nämlich die in dem Netzwerk vorhandenen Netzwerk-Komponenten in Reihe miteinander zu verbunden und am jeweiligen Ende einer Reihe jeweils einen Feldbus-Master anzuordnen, mit einer redundanten logischen Kommunikationsverbindung der Kommunikationsteilnehmer des Netzwerkes mit den am Ende der Linie bzw. der Reihe angeordneten Feldbus-Mastern kombiniert. Hierdurch wird eine hochverfügbare Kommunikation erreicht, die gleichwertig bzw. höherwertig ist als die sonst bekannten Hochverfügbarkeitstopologien wie Ring und Stern.

Als Netzwerk-Komponenten können im Rahmen des erfindungsgemäßen Systems sowohl Switche als auch Feldgeräte, beispielsweise Aktoren und Sensoren eines Automatisierungssystems, eingesetzt werden. Bei den Kommunikationsteilnehmern handelt es sich insbesondere um Feldgeräte eines Automatisierungssystems. Durch die Topologie sind sämtliche Netzwerk-Komponenten mit beiden Feldbus-Mastern verbunden. Die Feldbus-Master selbst können wiederum auch redundant innerhalb des Netzwerkes ausgelegt sein, so dass vier Feldbus-Master jeweils zwei an den Enden der Linien angeordnet sind. Jeder Kommunikationsteilnehmer bzw. jede Netzwerk-Komponente hat somit eine physikalische Verbindung zu mindestens zwei Feldbus-Mastern. Über diese physikalische Verbindung werden die Daten gesendet, wobei parallel zur physikalischen Verbindung jede Netzwerk-Komponente über je eine logische Verbindungen jeweils zu einem der Feldbus-Master verfügt. Bei einer Netzwerkauslegung mit redundanten Feldbus-Mastern verfügt jede Netzwerk-Komponente über je eine logische Verbindung zu jeweils einem der redundanten Feldbus-Master.

Durch diese Netzwerktopologie kann eine Netzwerk-Komponente von beiden Feldbus-Mastern Daten empfangen und auch an beide Feldbus-Master Daten senden. Ist die physikalische Verbindung unterbrochen, bsp. dadurch, dass eine Netzwerk-Komponente ausfällt oder die physikalische Verbindung an sich unterbrochen ist, so kann jede Netzwerk-Komponente bzw. jeder Kommunikationsteilnehmer noch mit mindestens einem Feldbus-Master kommunizieren. Hierbei kann die Kommunikation schnell aufrechterhalten werden, da nicht wie im MRP-Protokoll erst ein Testpaket, welches über den Redundanzmanager versendet wird, durch den gesamten Ring bis wieder zum Testmanager hin gesendet werden muss.

Eine schnelle Wiederaufnahme bzw. eine kurze Erholungszeit wird durch die erfindungsgemäße Netzwerktopologie mit der redundanten logischen Kommunikationsverbindung der Kommunikationsteilnehmer auf einfache Weise gewährleistet. Es können durch das erfindungsgemäße Kommunikationssystem Unterbrechungszeiten realisiert werden, die kürzer als 10 ms sind.

In zwei vorteilhaften Ausbildungen der Erfindung kann die physikalische Kommunikationsverbindung als Feldbus oder auch als industrielles WLAN ausgebildet sein. Der Vorteil hierbei ist, dass sowohl ein drahtgebundenes Netzwerk realisiert werden kann als auch ein drahtloses Netzwerk, wobei das drahtlose Netzwerk auch den Anforderungen, wie sie in der Industrieautomatisierung gefordert werden, beispielsweise Echtzeitfähigkeit genügen muss.

Eine weitere vorteilhafte Ausbildung der Erfindung ist dadurch gekennzeichnet, dass die eine oder mehreren Netzwerk-Komponenten des Kommunikationssystem als Switch ausgebildet sind und einer Reihe von Kommunikationsteilnehmern vorgeschaltet sind, wobei jeder hinter dem Switch angeordnete Kommunikationsteilnehmer über je eine logische Kommunikationsverbindung mit je einem der Feldbus-Master verfügt. Hierdurch wird es ermöglicht, zusätzlich zu der Struktur der oben spezifizierten Linie eine Stichtopologie zu implementieren, bei der die in der Linie eingebrachten Netzwerk-Komponenten als Switche implementiert sind und hinter jedem Switch in Reihe geschaltet eine Anzahl von Feldgeräten angeordnet ist. Die einzelnen Feldgeräte können hierbei über je eine logische Verbindung zu einem der beiden Feldbus-Mastern an den Enden verfügen. Die physikalische Verbindung zu den beiden Feldbus-Mastern erfolgt über den Switch.

Eine weitere vorteilhafte Ausbildung des Systems ist gekennzeichnet durch die Idee, dass je eine oder mehrere Netzwerk-Komponenten als Kommunikationsteilnehmer ausgebildet sind. Hierbei ist die Topologie stark vereinfacht, so dass lediglich eine einzelne Linie mit Feldbus-Mastern an den jeweiligen Enden existiert und in der Linie die einzelnen Netzwerk-Komponenten sogleich Kommunikationsteilnehmer, d.h. in der Regel Feldgeräte, also Aktoren oder Sensoren eines Automatisierungssystems sind. Eine komplexe Struktur erübrigt sich hierbei und die physikalische Verbindung zu den Feldbussen erfolgt beispielsweise über zwei Ports der Feldgeräte bzw. Kommunikationsteilnehmer und zu jedem Feldbus-Master ist jeweils eine logische Kommunikationsverbindung aufgebaut.

Eine weitere vorteilhafte Ausbildung des Systems besteht darin, dass für die logische Kommunikationsverbindung eine als Primary- und die andere logische Kommunikationsverbindung als Backup- Kommunikationsverbindung vorgesehen ist. In der Kommunikation der Kommunikationsteilnehmer bzw. Feldgeräte mit den Steuerungen bzw. Feldbus-Mastern ist hierdurch gewährleistet, dass die Daten nur über einen der beiden logischen Kanäle zwischen der Steuerung und dem Feldgerät ausgetauscht werden und zwar über den Primary-Kanal. Der andere Kommunikationskanal, der Backup-Kanal wird zum anderen Feldbus-Master bzw. zur speicherprgrammierbaren Steuerung zwar aufrechterhalten, der Datenaustausch erfolgt jedoch über den Primary-Kanal, solange die Primary-Kommunikationsverbindung aktiv ist. Die Kommunikation zwischen den Kommunikationsteilnehmern und den speicherprogrammierbaren Steuerungen bzw. Feldbus-Mastern erfolgt hierbei nach dem System und dem Verfahren wie es in der europäischen Anmeldung mit den Anmeldekennzeichnen 07017367.9 beschrieben ist.

Eine weitere vorteilhafte Ausbildung der Erfindung ist dadurch gekennzeichnet, dass die Kommunikationsteilnehmer derart ausgebildet sind, dass sie bei Ausfall der logischen Primary-Kommunikationsverbindung zum Feldbus-Master eine Meldung an den Feldbus-Master, der die Backup-Kommunikationsverbindung hält, senden. Vorteilhaft ist hierbei, dass wenn die physikalische Kommunikationsverbindung unterbrochen ist, sei es durch Ausfall eines der Linie angeordneten Kommunikationsteilnehmer oder sei es durch eine sonstige Unterbrechung der physikalischen Kommunikationsverbindung, beispielsweise durch Kabelbruch oder durch Ausfall einer WLAN-Strecke, so wird dies von den Kommunikationsteilnehmern bzw. den Feldgeräten festgestellt, dadurch dass sie keine Daten vom Feldbus-Master in der entsprechenden Zykluszeit erhalten. Stellen die Kommunikationsteilnehmer einen derartigen Datenausfall fest, so nutzen sie ihren Backup-Kanal um dem anderen Feldbus-Master mitzuteilen, dass dieser nunmehr zum Primary-Kanal wechseln soll und somit in Zukunft die Daten zwischen dem ursprünglichen Feldbus-Master und dem dementsprechenden Kommunikationsteilnehmer auf Primary geschaltet werden und für die Kommunikation verwendet werden.

Alternativ schlägt das erfindungsgemäße System vor, dass die Kommunikationsteilnehmer über ein Register verfügen und derartig ausgebildet sind, dass sie bei Ausfall der logischen Primary Kommunikationsverbindung zum Feldbus-Master einen Eintrag mit der Information, dass die Verbindung ausgefallen ist im Register hinterlegen und bei dem alle Feldbus-Master derart ausgebildet sind, dass er die Einträge in den Registern der Kommunikationsteilnehmer zyklisch abfragen. Statt dem Feldbus-Master somit mitzuteilen, dass die Primary-Kommunikationsverbindung zum Feldbus-Master ausgefallen ist und somit jetzt die Daten vom anderen Feldbus-Master empfangen werden sollen, können die Kommunikationsteilnehmer diese Information in dem Ausführungsbeispiel erstmal in ein Register bei sich schreiben und die Feldbus-Master rufen diese Information regelmäßig bei den Kommunikationsteilnehmern ab. Wird somit die logische Primary-Kommunikationsverbindung zum Feldbus-Master unterbrochen, so registrieren der entsprechende Kommunikationsteilnehmer dies in seinem Register und wenn das Register in zyklischen Abständen vom anderen Feldbus-Master ausgelesen wird, so stellt dieser fest, dass er hier umschalten muss auf Primary-Kommunikationsverbindung und die Kommunikation zu dem entsprechenden Kommunikationsteilnehmer übernehmen muss. Somit verfügt das System über die Möglichkeit bei einem Ausfall der logischen Primary-Kommunikationsverbindung zum Feldbus-Master eine Umschaltung des anderen Feldbus-Masters zur Primary- Kommunikationsverbindung durchzuführen.

Im Folgenden wird die Erfindung anhand der Figuren näher beschrieben und erläutert:

### Es zeigen:

- FIG 1: Ringtopologie und redundanter Feldbus-Master als Stand der Technik,
- FIG 2: Sterntopologie und redundanter Feldbus-Master als Stand der Technik,
- FIG 3: Linie und redundante Feldbus-Master,
- FIG 4: Fehlerszenario in der Linie,
- FIG 5: Linie und redundanter Feldbus-Master mit singulärer Steuerung,
- FIG 6: Linie und redundanter Feldbus-Master mit Stichen,
- FIG 7: doppelte Linie mit zweifach-redundantem Feldbus-Master,
- FIG 8: doppelte Linie mit zweifach-redundantem Feldbus-Master und redundantem Stich,
- FIG 9: Feldgerät in der der Linie mit Register.

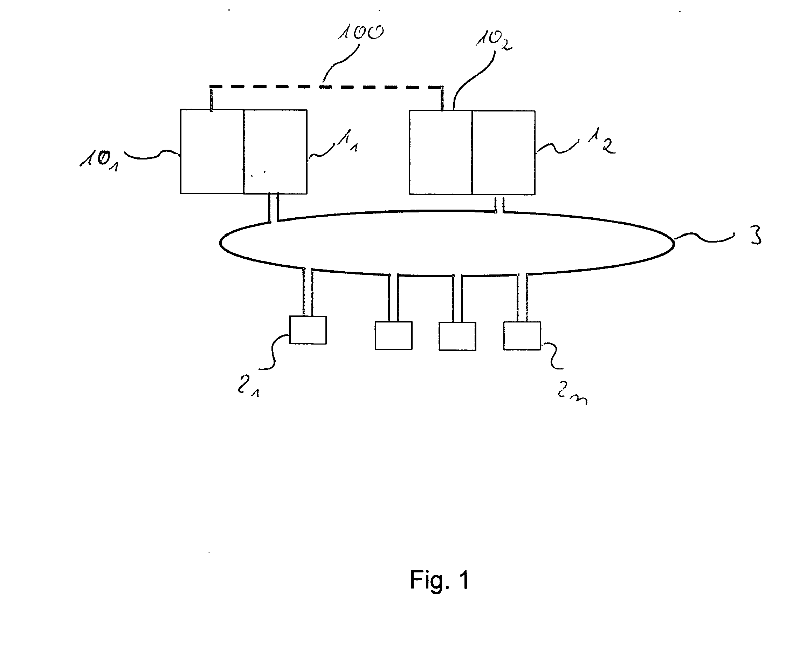

FIG 1 zeigt eine Ringtopologie eines Kommunikationsnetzwerkes mit redundanten Feldbus-Mastern. Hierbei sind zwei Controller bzw. Steuerungen 10₁, 10₂ über eine optionale Verbindung 100 synchronisiert. An die Steuerungen schließt sich jeweils ein Feldbus-Master 1₁, 1₂ an. Die beiden Feldbus-Master sind über eine physikalische Kommunikationsverbindung 3, welche als Ring ausgestaltet ist, miteinander verbunden. In den Ring eingebunden sind ein oder mehrere Netzwerk-Komponenten 2₁ bis 2ₙ. Die Daten werden nun über die physikalische Kommunikationsverbindung 3 von den Feldbus-Mastern an die Netzwerk-Komponenten gesendet und umgekehrt werden Daten aus dem Prozess bzw. aus der Fertigung von den Feldgeräten bzw. Netzwerk-Komponenten an die Feldbus-Master und damit an die Steuerungen gesendet. Die Kommunikation innerhalb einer derartigen Ringtopologie wird mit Hilfe eines Redundanz-Managers organisiert. Der Redundanz-Manager leitet innerhalb der physikalischen Kommunikationsverbindung keine Pakete im Ring weiter und verhindert damit, dass entsprechende Datenpakete endlos im Ring zirkulieren. Die Kommunikation erfolgt auf Basis des **M**edia **R**edundancy **P**rotocols (MRP). Bei einer Ringtopologie basierend auf MRP sind die Erholungszeiten nach einem Ausfall oder einer Kommunikationsunterbrechung zwischen 200 ms und 500 ms.

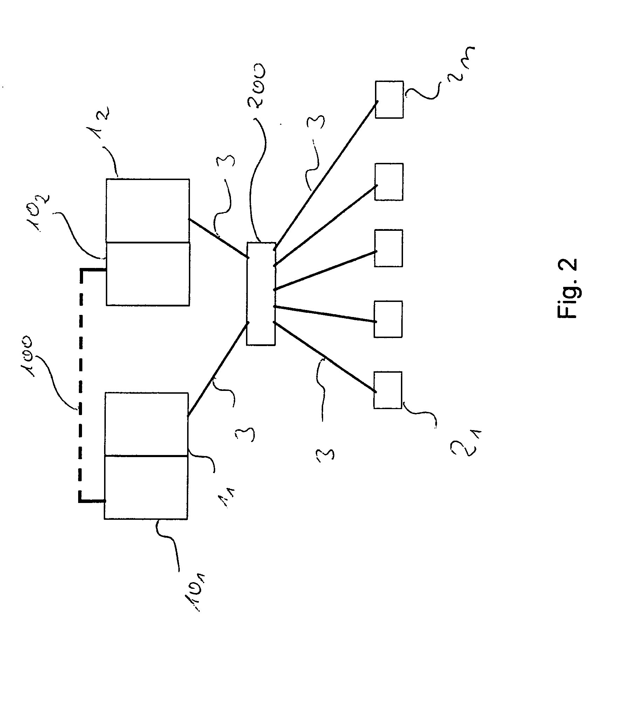

FIG 2 zeigt eine Stern-Topologie mit redundantem Feldbus-Master aus dem Stand der Technik. Zwei Steuerungen 10₁, 10₂ sind optional über eine Verbindung 100 synchronisiert. An die Steuerungen sind jeweils ein Feldbus-Master 1₁, 1₂ angeschlossen. Die Feldbus-Master sind über eine physikalische Kommunikationsverbindung 3 mit einem Mehrport-Switch 200 verbunden. Ausgehend von dem Mehrport-Switch sind einzelne Netzwerk-Komponenten 2₁ bis 2ₙ ebenfalls über jeweils eine physikalische Kommunikationsverbindung mit den Felsbus-Mastern 1₁, 1₂ verbunden. Der Nachteil bei einer derartigen Topologie ist darin zu sehen, dass die Mehrport-Switche einen Verfügbarkeitsengpass darstellen. Fällt einer der Mehrport-Switche aus, dann fallen alle an den Switch angeschlossenen Feldgeräte bzw. Netzwerk-Komponenten aus. Insofern ist eine Sterntopologie recht anfällig bei Fehlfunktion der Switche und ganze Teilbereiche des Netzwerks können ausfallen.

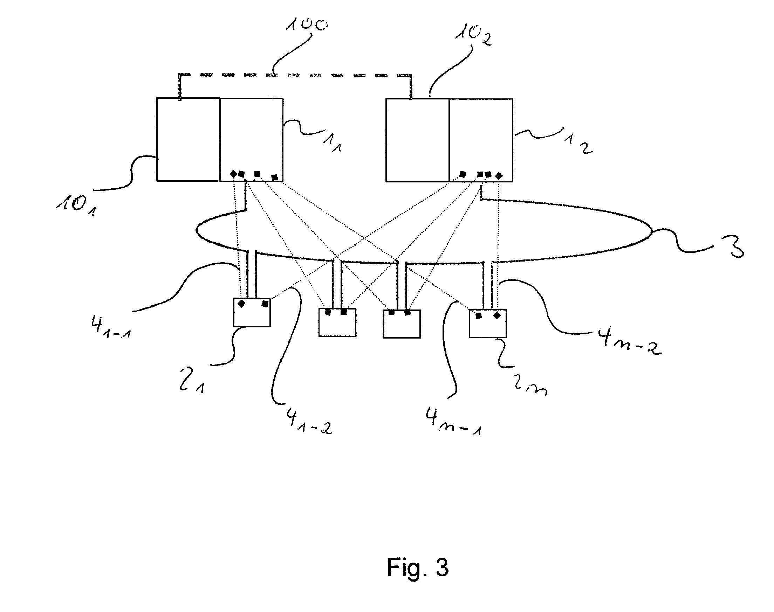

FIG 3 zeigt ein Ausführungsbeispiel des erfindungsgemäßen Kommunikationssystems, bei dem die physikalische Kommunikationsverbindung 3 als Linie implementiert ist. Zwei Steuerungen 10₁, 10₂ sind ebenfalls wieder über eine optionale Verbindung 100 synchronisiert. An die Steuerung 10₁, 10₂ schließen sich jeweils ein Feldbus-Master 1₁, 1₂ an. Die Feldbus-Master sind über die physikalische Kommunikationsverbindung 3 derart miteinander verbunden, dass ein Feldbus-Master am einen Ende der physikalischen Kommunikationsverbindung angeordnet ist und der andere Feldbus-Master am anderen Ende physikalischen Kommunikationsverbindung. Auf ihrem Weg von einem Feldbus-Master zum anderen Feldbus-Master verbindet die physikalische Kommunikationsverbindung 3 nunmehr eine Reihe von Netzwerk-Komponenten 2₁ bis 2ₙ. Die Netzwerk-Komponenten können entweder Feldgeräte sein oder auch Switche. In dem vorliegenden Ausführungsbeispiel sind die Netzwerk-Komponenten als Feldgeräte, also als Aktoren und Sensoren, die in direkter Verbindung mit dem Prozess stehen, ausgebildet. Jedes Feldgerät 2₁ bis 2ₙ verfügt über zwei logische Kommunikationsverbindungen, wobei eine erste Kommunikationsverbindung zum ersten Feldbus-Master 1₁ und eine zweite logische Kommunikationsverbindung zum zweiten Feldbus-Mater 1₂ aufgebaut wird. Die logischen Kommunikationsverbindungen 4₁₋₁ bis 4ₙ₋₂ sind in FIG 3 als gestrichelte Linien von den Feldgeräten zu den Feldbus-Mastern dargestellt.

Daten werden nun von einem Feldbus-Master über die Linie versendet. Ein Feldgerät verfügt über zwei logische Kommunikationsverbindungen, beispielsweise das Feldgerät 2₁ über die erste logische Kommunikationsverbindung 4₁₋₁ und die zweite logische Kommunikationsverbindung 4₁₋₂. Einer der beiden Feldbus-Master hält in der vorgestellten Topologie die logische Primary-Kommunikationsverbindung bzw. den Primary-Kanal und der andere Feldbus-Master die logische Backup-Kommunikationsverbindung bzw. den Backup-Kanal. Das Feldgerät tauscht die Daten über den logischen Primary-Kanal in der Darstellung, beispielsweise über den logischen Kanal 4₁₋₁ aus. Der andere Kanal 4₁₋₂ zwischen dem Feldgerät 2₁ und dem Backup-Feldbus-Master 1₂ dient lediglich als Backup-Kanal. Ein Datenaustausch erfolgt über diesen logischen Kanal nicht, oder "nur lesend" aus Sicht des Feldbusmasters 1₂.

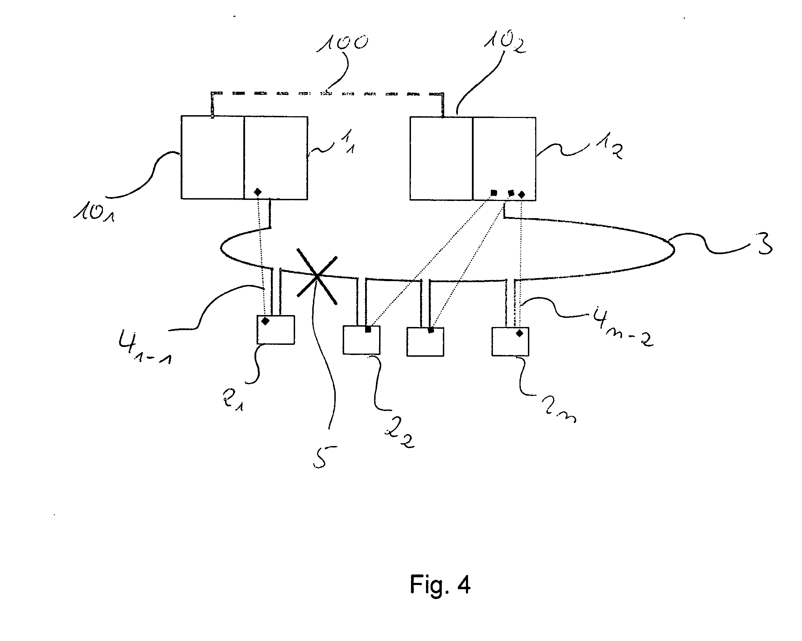

FIG 4 zeigt ein Fehlerszenario in dem Ausführungsbeispiel, wie es in FIG 3 beschrieben ist. Beispielsweise fällt die physikalische Kommunikationsverbindung 3 durch Kabelbruch an der Stelle 5 aus. Die beiden Feldbus-Master 1₁ und 1₂ sind nunmehr nicht durchgängig über die physikalische Kommunikationsverbindung 3 miteinander verbunden. Das Feldgerät 2₁ hat nur noch eine physikalische Verbindung zum Feldbusmaster 1₁. Über seine logische Kommunikationsverbindung 4₁₋₁ kann es weiterhin Daten mit dem Feldbus-Master austauschen. Die Feldgeräte 2₂ bis 2ₙ können keine Daten mehr mit dem Feldbus-Master 1₁ austauschen. Waren ihre logischen Verbindungen zum Feldbus-Master 1₁ die Primary-Verbindungen, so können diese nunmehr nicht mehr genutzt werden und die Feldgeräte 2₂ bis 2ₙ müssen nunmehr über ihre zweite logische Verbindung, die ursprüngliche Backup-Verbindung mit dem Feldbus-Master 1₂ kommunizieren. Nach wie vor kann somit jedes Feldgerät Daten mit einem der Feldbus-Master und damit mit der Steuerung austauschen. Die Umschaltung von Primary- auf Backup-Kanal erfolgt wie bereits in der Beschreibung erwähnt nach dem Prinzip, welches in der europäischen Anmeldung 07017367.9 dargestellt ist. Eine Umschaltung von Backup auf Primary und damit die Wiederaufnahme der Kommunikation im Fehlerfalle kann sehr schnell erfolgen, da im Gegensatz zum Media Redundancy Protocol, bei dem der Redundanz-Manager zur Überprüfung der Topologie Datenpakete auf den Ring sendet und die Ankunft des Datenpaketes nach Durchlauf des Ringes überprüft, hier eine derartige Überprüfung nicht notwendig ist, und das Umschalten von einer logischen Kommunikationsverbindung auf die andere logische Kommunikationsverbindung sofort erfolgen kann, wenn der Fehler innerhalb der normalen Zykluszeiten erkannt wird.

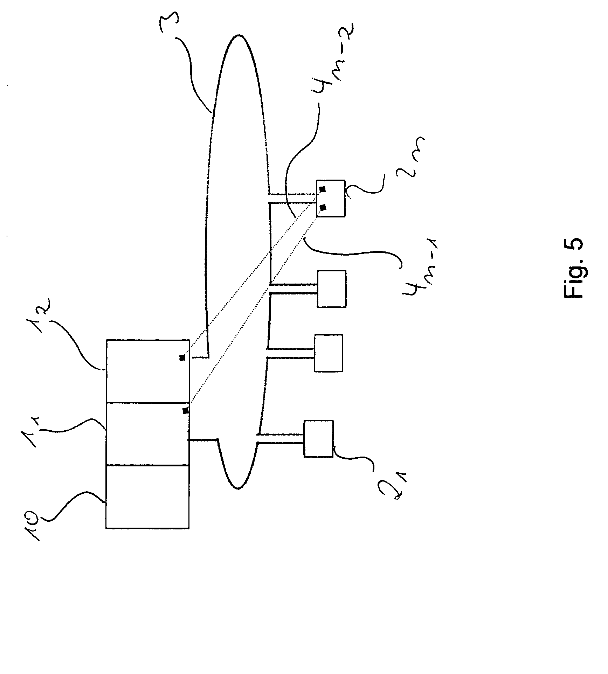

FIG 5 zeigt ebenfalls eine Linie als ein weiteres Ausführungsbeispiel der vorliegenden Erfindung. Hierbei ist nur eine Steuerung 10 in dem Automatisierungssystem vorhanden und an die Steuerung sind zwei Feldbus-Master 1₁ und 1₂ angeschlossen. Die sonstige Topologie ist so ausgeführt, wie auch in FIG 3 dargestellt. Von einem Feldbus-Master 1₁ geht eine physikalische Kommunikationsverbindung aus, in die Netzwerk-Komponenten 2₁ bis 2ₙ der Reihe nach eingebunden sind und schließlich endet die physikalischen Kommunikationsverbindung 3 beim zweiten Feldbus-Master 1₂. Alle Netzwerk-Komponenten 2₁ bis 2ₙ sind über zwei logische Verbindungen 4 mit jeweils einem der beiden Feldbus-Master 1₁ und 1₂ verbunden. Am Beispiel der Netzwerk-Komponente 2ₙ ist dies dargestellt: Die Netzwerk-Komponente 2ₙ weist eine logische Kommunikationsverbindung 4ₙ₋₁ zum Feldbus-Master 1₁ auf und eine weitere logische Kommunikationskomponente 4ₙ₋₂ zum Feldbus-Master 1₂. Eine redundante bzw. hochverfügbare Kommunikation ist mit dieser Topologie ebenfalls realisierbar. Eine Kommunikationsunterbrechung dadurch, dass eine der Netzwerk-Komponenten ausfällt oder dadurch, dass die physikalische Kommunikationsverbindung unterbrochen ist, kann in dem hochverfügbaren System dadurch kompensiert werden, dass von einer der zwei logischen Kommunikationsverbindungen 4ₙ₋₁ und 4ₙ₋₂ auf die andere umgeschaltet wird. Dies erfolgt ebenfalls nach dem Verfahren, welches in der europäischen Anmeldung 07017367.9 bereits angegeben wurde.

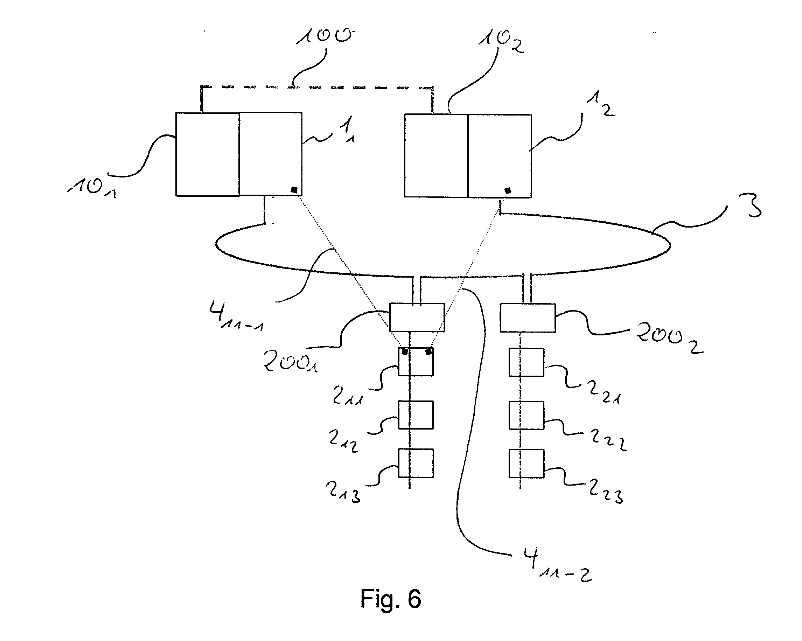

In FIG 6 ist ein weiteres Ausführungsbeispiel der vorliegenden Erfindung dargestellt. Hierbei ist die Erfindung als Linie implementiert, wobei als Kommunikationskomponenten, die in der Linie in der physikalischen Kommunikationsverbindung 3 zwischen den beiden Feldbus-Mastern 1₁ und 1₂ in Reihe geschaltet sind, in diesem Fall Switche 200₁ und 200₂ verwendet wurden. Die Switche selber sind somit über die physikalische Kommunikationsverbindung 3 mit den beiden Feldbus-Mastern verbunden. An den Switchen ist jeweils in Reihe eine Anzahl von Feldgeräten angeschlossen 2₁₁ bis 2₂₃. Jedes dieser Feldgeräte verfügt nun wieder über zwei logische Kommunikationsverbindungen 4 zu den zwei Feldbus-Mastern. Am Beispiel des Feldgeräts 2₁₁ ist dies ausführlich dargestellt. Das Feldgerät verfügt über eine erste logische Kommunikationsverbindung 4₁₁₋₁ zum Feldbus-Master 1₁ und über eine zweite logische Kommunikationsverbindung 4₁₁₋₂ zum Feldbus-Master 1₂. Auch hierbei kann nun, wenn die physikalische Kommunikationsverbindung der spezifizierten Linie unterbrochen wird, auf eine der beiden logischen Kommunikationsverbindungen zurückgegriffen werden, weil sie trotz Unterbrechung immer noch aktiv ist. Auch hierbei wird zwischen den Feldbus-Mastern bzw. Primary- und Backup-Kanal dann umgeschaltet.

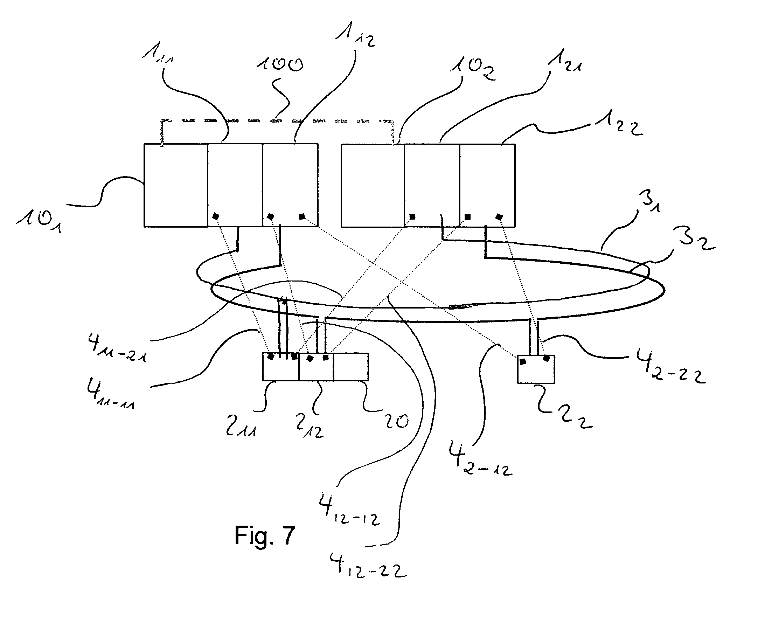

In FIG 7 ist eine weitere Ausführung der Erfindung dargestellt. Hier ist die Topologie derart gestaltet, dass eine Linie mit zweifach-redundantem Feldbus-Master implementiert ist. An jede Steuerung 10₁ und 10₂ sind zwei Feldbus-Master 1₁₁, 1₁₂ sowie 1₂₁ und 1₂₂ angeschlossen. Von jedem Feldbus-Master, welcher an einer CPU/Steuerung angeschlossen ist, geht nun eine physikalische Kommunikationsverbindung 3 zu einem der beiden Feldbus-Master, die an die andere CPU angeschlossen ist, aus. Dies ist am Beispiel des Feldbus-Masters 1₁₁ erläutert, von dem die physikalische Kommunikationsverbindung 3₁ ausgeht, welche schließlich beim Feldbus-Master 1₂₁ endet. Der Feldbus-Master 1₁₂ ist über die Kommunikationsverbindung 3₂ hingegen mit dem Feldbus-Master 1₂₂ verbunden. Die Kommunikationsverbindung 3₁ hat in Reihe zwischen den zwei Feldbus-Mastern das Feldgerät bzw. die Netzwerk-Komponente 2₁₁ angeordnet. In der parallelen physikalischen Kommunikationsverbindung 3₂ ist ein zu der Netzwerk-Komponente 2₁₁ redundante Netzwerk-Komponente 2₁₂ in Reihe angeschlossen. Jede der beiden Netzwerk-Komponenten, die somit über eine andere physikalische Kommunikationsverbindung im System eingebunden sind, bauen nun wieder ihre logischen Verbindungen zu beiden Feldbus-Mastern ihres physikalischen Kommunikationssystems auf. Die Netzwerk-Komponente 2₁₁ verfügt somit über eine logische Kommunikationsverbindung 4₁₁₋₁₁ zum Feldbusmaster 1₁₁ und über eine zweite logische Kommunikationsverbindung 4₁₁₋₂₁ zu dem zweiten über die Kommunikationsverbindung 3₁ angeschlossenen Feldsbus-Master 1₂₁. In das System können dann weitere, nicht redundant ausgelegte Netzwerk-Komponenten, wie die Komponente 2₂ eingebunden sein, die ganz normal ihre Kommunikationsverbindungen zu den Feldbus-Mastern aufbauen. Die zwei redundanten Netzwerk-Komponenten 2₁₁ und 2₁₂ bekommen ihre Daten dann von einem Feldgerät 20, welches für höchste Kommunikationsanforderungen ausgebildet ist.

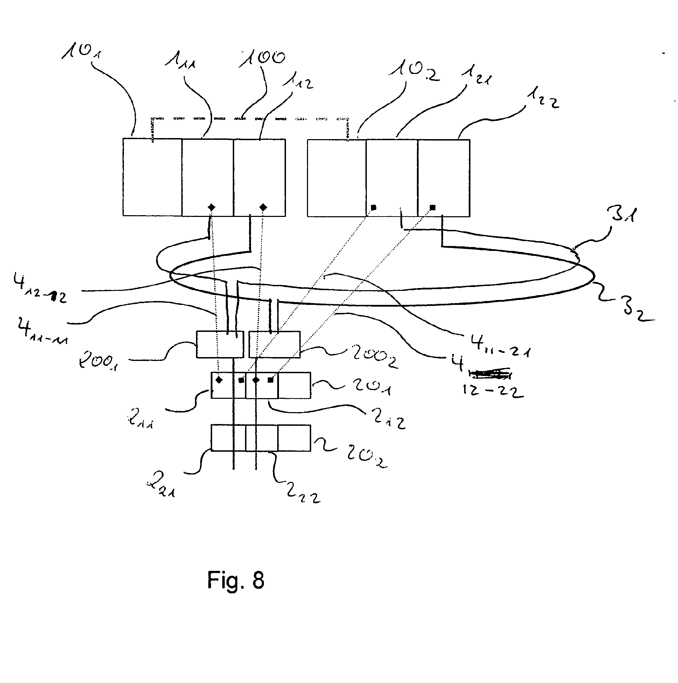

In FIG 8 ist ebenfalls ein doppelte Linie mit zweifach redundantem Feldbus-Master dargestellt. Hierbei sind die Netzwerk-Komponenten jeweils wieder durch Switche 200₁ und 200₂ ersetzt. An die jeweiligen Switche ist dann eine Reihe von redundanten Feldgeräten angeschlossen. Die redundanten Feldgeräte bauen jeweils über eine eigene physikalische Verbindung 3₁ bzw. 3₂ ihre logischen Verbindungen auf, beispielsweise für das Feldgerät 2₁₁ eine Kommunikationsverbindung 4₁₁₋₁₁ zum Feldbus-Master 1₁₁ und eine redundante logische Kommunikationsverbindung 4₁₁₋₂₁ zum Feldbus-Master 1₂₁.

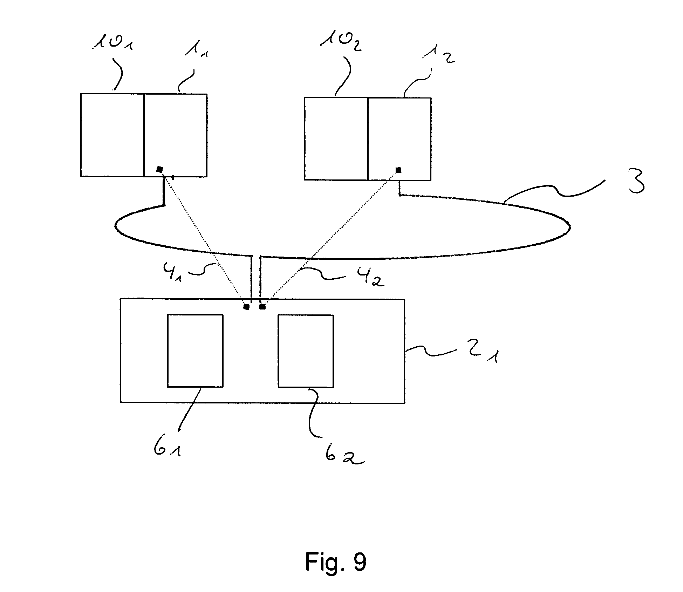

FIG 9 zeigt eine einfache Linie, in den in die physikalische Kommunikationsverbindung 3 nur ein Feldgerät zwischen die beiden Feldbus-Master 1₁ und 1₂ eingebaut ist. Das Feldgerät 2 verfügt über ein Register 6₁, 6₂ für jedes seiner logischen Kommunikationsverbindungen. In dem Register kann hinterlegt werden, mit welchem Feldbus-Master das Feldgerät kommuniziert. Beispielsweise ist folgende Belegung möglich:
A=1: Zumindest eine Verbindung ist Primary.
A=0: Keine Verbindung ist Primary.
B=1: Diese Verbindung ist aus Sicht des Feldgeräts Primary.
B=0: Diese Verbindung ist aus Sicht des Feldgeräts Backup.

Das Register ermöglicht die Umschaltanforderung bei Kommunikationsausfall mit Hilfe des Feldgeräts durchzuführen. Das Feldgerät zeigt der Backup-Verbindung an, ob die Primary-Verbindung aktiv ist oder nicht. Mit Hilfe des Registers kann der redundante Steuerung oder Feldbus-Master erkennen, ob Verbindung bei gleichzeitigem Verbindungsaufbau Primary geworden ist, oder ob sie Backup geworden ist. Gleichzeitig kann über dieses Register A erkannt werden, ob noch eine Verbindung Primary ist oder nicht, wobei im letzteren Fall die Backup-Verbindung Primary werden soll. Das detaillierte Verfahren ist in der europäischen Anmeldung 07017367.9 geschrieben.

## Patentansprüche

1. Kommunikationssystem zur zuverlässigen Kommunikation mit Kommunikationsteilnehmern,
• mit mindestens zwei Feldbus-Mastern (1₁, 1₂) zur Steuerung der Kommunikation,
• mit einer oder mehreren Netzwerk-Komponenten (2₁..2ₙ), welche über mindestens eine physikalische Kommunikationsverbindung (3) mit den Feldbus-Mastern verbunden sind,
• wobei die physikalische Kommunikationsverbindung bei einem Feldbus-Master (1₁) beginnend die ein oder mehreren Netzwerk-Komponenten (2₁..2ₙ) in Reihe miteinander verbindet und bei dem zweiten Feldbus-Master (1₂) endet und
• mit einem oder mehreren Kommunikationsteilnehmern, welche über je eine logische Kommunikationsverbindung (4₁..4ₙ) mit je einem der Feldbus-Master verbunden sind.

2. Kommunikationssystem nach Anspruch 1, bei dem die physikalische Kommunikationsverbindung als Feldbus ausgebildet ist.

3. Kommunikationssystem nach Anspruch 1, bei dem die physikalische Kommunikationsverbindung als industrielles WLAN ausgebildet ist.

4. Kommunikationssystem nach einem der vorhergehenden Ansprüche, bei dem die eine oder mehrere Netzwerk-Komponente als Switch ausgebildet ist und einer Reihe von Kommunikationsteilnehmern vorgeschaltet ist, wobei jeder hinter einem Switch angeordnete Kommunikationsteilnehmer über je eine logische Kommunikationsverbindung mit je einem der Feldbus-Master verfügt.

5. Kommunikationssystem nach einem der Ansprüche 1 bis 3, bei dem die je eine oder mehrere Netzwerk-Komponente als Kommunikationsteilnehmer ausgebildet ist.

6. Kommunikationssystem nach einem der vorhergehenden Ansprüche, bei dem die logische Kommunikationsverbindung eines ersten Feldbus-Masters als Primary- Kommunikationsverbindung ausgebildet ist und die des oder der anderen Feldbus-Master als Backup-Kommunikationsverbindung ausgebildet ist.

7. Kommunikationssystem nach einem der vorhergehenden Ansprüche, bei dem die Kommunikationsteilnehmer derart ausgebildet sind, dass sie bei Ausfall der logischen Primary-Kommunikationsverbindung zum ersten Feldbus-Master eine Meldung an den oder die anderen Feldbus-Master senden.

8. Kommunikationssystem nach einem der Ansprüche 1 bis 6, bei dem die Kommunikationsteilnehmer über ein Register verfügen und derart ausgebildet sind, dass sie bei Ausfall der logischen Primary-Kommunikationsverbindung zum ersten Feldbus-Master einen Eintrag mit der Information, dass die Verbindung ausgefallen ist im Register hinterlegen und bei dem alle Feldbus-Master derart ausgebildet sind, dass sie die Einträge in den Registern der Kommunikationsteilnehmer zyklisch abfragen.

9. Kommunikationssystem nach einem der vorhergehenden Ansprüche, bei dem bei Ausfall der logischen Primary-Kommunikationsverbindung zum ersten Feldbus-Master eine Umschaltung in einem der anderen Feldbus-Master zur Primary-Kommunikationsverbindung vorgesehen ist.

10. Kommunikationsverfahren zur zuverlässigen Kommunikation mit Kommunikationsteilnehmern,
• bei dem mindestens zwei Feldbus-Mastern die Kommunikation steuern,
• bei dem eine oder mehrerer Netzwerk-Komponenten über mindestens eine physikalische Kommunikationsverbindung mit den Feldbus-Mastern verbunden sind,
• wobei die eine oder mehreren Netzwerk-Komponenten bei einem Feldbus-Master beginnend in Reihe über die physikalische Kommunikationsverbindung miteinander verbunden sind und die physikalische Kommunikationsverbindung bei dem zweiten Feldbus-Master endet und
• bei dem ein oder mehrere Kommunikationsteilnehmer über je eine logische Kommunikationsverbindung mit je einem der Feldbus-Master kommunizieren.

11. Kommunikationsverfahren nach Anspruch 10, bei dem die physikalische Kommunikationsverbindung über einen Feldbus erfolgt.

12. Kommunikationsverfahren nach Anspruch 10, bei dem die physikalische Kommunikationsverbindung über ein industrielles WLAN erfolgt.

13. Kommunikationsverfahren nach einem der Ansprüche 10 bis 12, bei dem die physikalische Kommunikationsverbindung über einen oder mehrere Switche realisiert ist und bei dem die Switche einer Reihe von Kommunikationsteilnehmern vorgeschaltet sind, wobei jeder hinter einem Switch angeordnete Kommunikationsteilnehmer über je eine logische Kommunikationsverbindung mit je einem der Feldbus-Master kommuniziert.

14. Kommunikationsverfahren nach einem der Ansprüche 10 bis 12, bei dem die Netzwerk-Komponenten Kommunikationsteilnehmer sind.

15. Kommunikationsverfahren nach einem der Ansprüche 10 bis 14, bei dem mit einem ersten Feldbus-Master über eine Primary-Kommunikationsverbindung und mit dem oder den anderen Feldbus-Mastern über eine Backup-Kommunikationsverbindung kommuniziert wird.

16. Kommunikationsverfahren nach einem der Ansprüche 10 bis 15, bei dem die Kommunikationsteilnehmer bei Ausfall der logischen Primary-Kommunikationsverbindung zum ersten Feldbus-Master eine Meldung an den oder die anderen Feldbus-Master senden.

17. Kommunikationsverfahren nach einem der Ansprüche 10 bis 15, bei dem die Kommunikationsteilnehmer bei Ausfall der logischen Primary-Kommunikationsverbindung zum ersten Feldbus-Master einen Eintrag mit der Information, dass die Verbindung ausgefallen ist in einem Register hinterlegen und bei dem der oder die anderen Feldbus-Master die Einträge in den Registern der Kommunikationsteilnehmer zyklisch abfragen.

18. Kommunikationsverfahren nach einem der Ansprüche 10 bis 17, bei dem bei Ausfall der logischen Primary-Kommunikationsverbindung zum ersten Feldbus-Master in einem der anderen Feldbus-Master zur Primary-Kommunikationsverbindung umgeschaltet wird.
